# EUROPEAN PATENT APPLICATION

(11) **EP 3 741 715 A1**
(43) Date of publication of application: **25.11.2020**
(21) Application number: 20020213.3
(22) Date of filing: 12.05.2020
(51) Int. Cl.: B65G 47/08, B65G 47/18, B65G 47/26, B65G 47/91, B65G 11/02, B65B 69/00, B65B 35/12, B65G 61/00, B65G 65/00

(54) **APPARATUS FOR RECONFIGURATION OF A PLURALITY OF ARTICLES**

(30) Priority: 22.05.2019 SK 500252019
(71) Applicant: Manz Slovakia, s.r.o., 915 01 Nove Mesto nad Vahom (SK)
(72) Inventor: Janega, Miroslav, 916 21 Cachtice (SK)
(74) Representative: Andera, Jiri

(57) **Abstract**

An apparatus for reconfiguration of a plurality of articles (6) from their input configuration, in particular from the configuration of a transport package (11) of a plurality of articles (6), into a desired output configuration. The apparatus comprises an inlet grid (1) with a plurality of inlet openings (2) the mutual arrangement of which corresponds to the input configuration of the plurality of articles (6). Each inlet opening (2) connects to an individual conveying route (3) with an end (4), the ends (4) of the conveying routes (3) being arranged into the desired output configuration of the articles (6).

## Description

### Technical Field

The present invention relates to an apparatus for reconfiguration of a plurality of articles from their input configuration, in particular from the configuration of a transport package of a plurality of articles, into a desired output configuration, the apparatus comprises an inlet grid with a plurality of inlet openings the mutual arrangement of which corresponds to the input configuration of the plurality of articles.

### Prior art

There is a need in a number of fields to remove a plurality of smaller articles from a transport package and arrange these articles against each other in a different configuration than when shipped in the transport package.

Cylindrical batteries supplied in boxes wherein the batteries are arranged vertically one next to the other may serve as an example. These batteries may sometimes need to be removed and put in a sequence for the next manufacturing step.

In general, such a technical problem can be described as a requirement to reconfigure a plurality of articles from an input configuration, as in the example above, from the transport packaging configuration, to an output configuration necessary for the following processing steps.

Such a problem is solved with known apparatuses by means of manipulators or robots provided with suitable grippers.

The speed of such a reconfiguration is limited by the parameters of the manipulator or robot used. A number of sorting workstations are installed to increase the speed. However, such an increase in performance has a negative impact on the cost of the whole apparatus, on its reliability, and also on the maintenance requirements of the whole apparatus.

### Disclosure of Invention

The aforementioned disadvantages are eliminated by an apparatus for reconfiguration of a plurality of articles from their input configuration, in particular from the configuration of a transport package of a plurality of articles, into a desired output configuration, the apparatus comprises an inlet grid with a plurality of inlet openings the mutual arrangement of which corresponds to the input configuration of the plurality of articles, in accordance with the present invention, characterised in that each inlet opening connects to an individual conveying route having an end, the ends of the conveying routes being arranged into a desired output configuration of the articles.

According to the invention, the apparatus enables to reconfigure a plurality of articles from an input arrangement, e.g. defined by an arrangement of the articles in a transport package, into a desired output configuration given by an article configuration requirement for the following manufacturing steps, in a reliable, quick manner, and at minimal cost.

In order to facilitate the connection of the individual conveying routes, it is advantageous to provide a passage module between the inlet openings of the inlet grid and the conveying routes, in which a fixed channel is formed between each inlet opening and its conveying route, wherein the spacing between the fixed channels at the outlet of the passage module at the connection of the conveying routes is greater than the spacing between the inlet openings.

According to a preferred embodiment, the conveying routes comprise hoses.

According to a further preferred embodiment, the conveying routes are oriented for gravitational transport of articles.

With the horizontal arrangement of the apparatus, the conveying routes can be connected to a drive medium, in particular gas or liquid or vacuum.

### Brief Description of Drawings

The invention will now be described by way of an exemplary embodiment and with reference to the accompanying drawings, in which:
Fig. 1 shows an axonometric view of an exemplary embodiment of a vertically arranged apparatus according to the invention;
Fig. 2 shows the apparatus of Fig. 1 with an inlet conveyor and a manipulator;

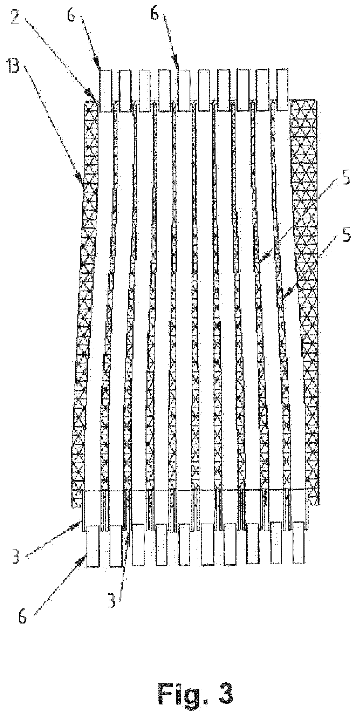

Fig. 3 is a cross-sectional view of the passage module;
Fig. 4 shows a cardboard package with batteries as an example of the processed articles;
Fig. 5 shows an exemplary embodiment of a horizontally arranged apparatus according to the invention.

### Description of preferred embodiments

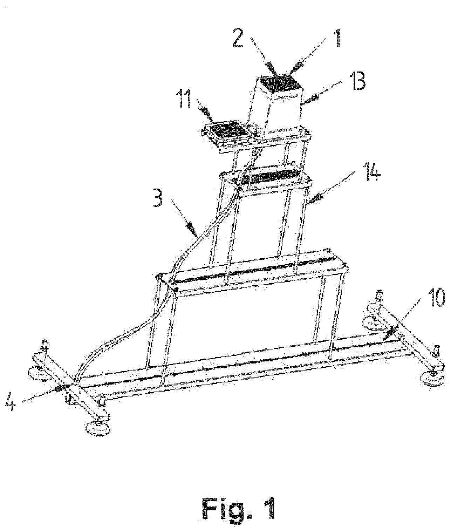

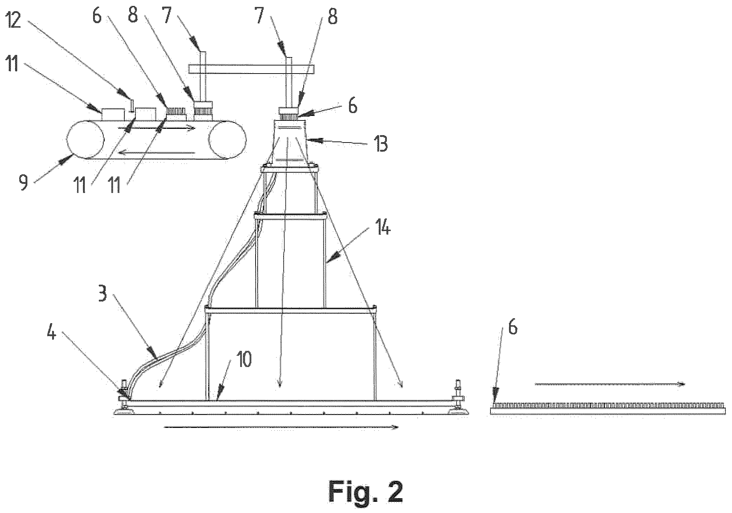

Fig. 1 and 2 show an exemplary embodiment of the apparatus according to the invention for reconfiguration of a plurality of articles 6 from an input configuration being a configuration of a transport packaging 11 of a plurality of articles 6 to an output configuration of the articles 6. The apparatus is supported on a frame 14.

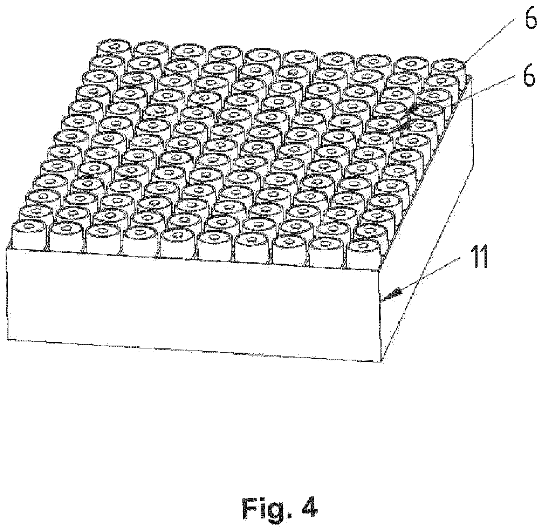

Fig. 4 shows an example of such a transport packaging 11 being a carton box, wherein the articles 6 are cylindrical batteries stored in an upright position in separate carton receptacles.

The arrangement of the plurality of articles 6 within the transport packaging 11 corresponds to the arrangement of the inlet openings 2 on the inlet grid 1 at the upper part of the passage module 13.

The passage module 13 is made of plastic by 3D printing technology and comprises a series of fixed channels 5, each connecting one inlet opening 2 of the inlet grid 1 to the corresponding conveying route 3 at the outlet of the passage module 13. The spacing between the fixed channels 5 at the outlet of the passage module 13 at the connection of the conveying routes 3 is greater than the spacing between the inlet openings 2. Thus, the spacing between the articles 6 will be increased so that the individual conveying routes 3, each of which is connected to one inlet opening 2, can be easily connected at the outlet of the passage module 13.

In the embodiment shown, each conveying route 3 comprises a hose made of a material with a low coefficient of friction.

In Fig. 1 and 2, only one conveying route 3 is shown for clarity. The ends 4 of all the conveying routes 3 that are not shown are arranged in the desired output configuration. In the described embodiment, the ends 4 are aligned one after the other so that at the output portion 10 of the apparatus, the articles 6 - batteries are aligned one after the other (see Fig. 2). It is understood that the ends 4 of all conveying routes 3 can be arranged in any output configuration of articles 6 that is required for further processing.

In the embodiment of Fig. 1 and 2, the articles 6 in the conveying routes 3 are moved by gravity. The articles 6 in carton packages 11 are conveyed to the apparatus by means of an inlet conveyor 9 (see Fig. 2).

At the inlet conveyor 9, the top of the carton packaging 11 is automatically cut by means of a cutting apparatus 12 to allow access to the articles 6.

All articles 6 from one package 11 are simultaneously picked up by a vacuum gripper 8 of a manipulator 7 and transferred to the inlet openings 2 on the inlet grid 1 at the upper part of the passage module 13. After the vacuum gripper 8 has been released, the articles 6, by gravity, first slide through the channels 5 in the passage module 13 and then through the downstream conveying routes 3. The ends 4 of all conveying routes 3 that are not shown are aligned one after the other so that at the output portion 10 of the apparatus, the articles 6 - batteries are aligned one after the other.

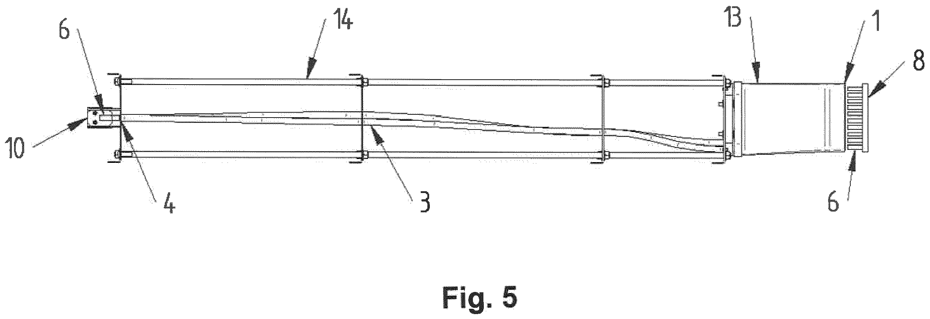

The exemplary embodiment of Fig. 5 of the apparatus according to the invention comprises of the same parts as the embodiment of Fig. 1 and 2, but the apparatus is oriented horizontally so that gravity cannot be used to convey the articles 6.

Therefore, at the gripper 8, it is possible to switch between a source of vacuum and compressed air. From a package 11 not shown, the articles 6 are removed by the gripper 8 under vacuum and after insertion of the articles 6 into the inlet openings 2 on the inlet grid 1 at the passage module 13, the gripper 8 supplies compressed air that moves the articles 6 to the ends 4 of the conveying routes 3.

Of course, any other pressure medium may be used instead of compressed air, or a vacuum source may be connected to the ends 4 of the conveying routes 3.

### List of reference signs

- 1: inlet grid
- 2: inlet opening
- 3: conveying route
- 4: end of the conveying route
- 5: fixed channel
- 6: article
- 7: manipulator
- 8: vacuum gripper
- 9: inlet conveyor
- 10: outlet part
- 11: package
- 12: cutting apparatus
- 13: passage module
- 14: frame

## Claims

1. An apparatus for reconfiguration of a plurality of articles (6) from their input configuration, in particular from the configuration of a transport package (11) of a plurality of articles (6), into a desired output configuration, the apparatus comprises an inlet grid (1) with a plurality of inlet openings (2) the mutual arrangement of which corresponds to the input configuration of the plurality of articles (6), **characterised in that** each inlet opening (2) connects to an individual conveying route (3) with an end (4), the ends (4) of the conveying routes (3) being arranged into the desired output configuration of the articles (6).

2. The apparatus according to claim 1, **characterised in that** a passage module (13) is arranged between the inlet openings (2) of the inlet grid (1) and the conveying routes (3), in which a fixed channel (5) is formed between each inlet opening (2) and its conveying route (3), wherein the spacing between the fixed channels (5) at an outlet from the passage module (13) at the connection of the conveying routes (3) is greater than the spacing between the inlet openings (2).

3. The apparatus according to claim 1 or 2, **characterised in that** the conveying routes (3) comprise hoses.

4. The apparatus according to any one of claims 1 to 3, **characterised in that** the conveying routes (3) are oriented for gravitational transport of articles (6).

5. The apparatus according to any one of claims 1 to 3, **characterised in that** the conveying routes (3) are connected to a drive medium source, in particular a gas or a liquid or vacuum.
